# EUROPEAN PATENT SPECIFICATION

(11) **EP 3 128 853 B1**
(45) Date of publication and mention of the grant of the patent: **10.10.2018**
(21) Application number: 15768445.7
(22) Date of filing: 27.03.2015
(51) Int. Cl.: A23L 17/60, A23L 17/00

(54) **METHOD FOR MANUFACTURING SEASONED LAVER**
VERFAHREN ZUR HERSTELLUNG VON GEWÜRZTEM PORPHYRTANG
PROCÉDÉ DE FABRICATION D'UNE PORPHYRE ASSAISONNÉE

(30) Priority: 28.03.2014 KR 20140036512
(43) Date of publication of application: 15.02.2017
(73) Proprietor: Cj Cheiljedang Corporation, Seoul 04560 (KR)
(72) Inventor: PARK, Joo Dong, Gimpo-si Gyeonggi-do 10097 (KR); LEE, Chang Yong, Suwon-si Gyeonggi-do 16324 (KR); CHUNG, Su Yeon, Seoul 06284 (KR); KANG, Myung Woo, Seoul 03620 (KR); KWON, Soon Hee, Seongnam-si Gyeonggi-do 13562 (KR); KIM, Sung Hee, Seoul 06744 (KR); PARK, Sung Yong, Gyeonggi-do 16666 (KR); SHINE, Sung Woo, Seoul 05090 (KR); AN, Jeong Seok, Seoul 06218 (KR); YOON, So Young, Seoul 06704 (KR); HONG, Jung Yeon, Uiwang-si Gyeonggi-do 16014 (KR)
(74) Representative: Dehns
(86) International application number: PCT/KR2015/003034
(87) International publication number: WO 2015/147588

(56) References cited:
- WO-A1-01/65951
- JP-A- S57 110 174
- JP-A- 2002 051 746
- KR-A- 20040 036 475
- KR-A- 20040 103 072
- KR-A- 20130 053 071
- KR-A- 20130 053 071
- KR-B1- 100 455 994
- KR-B1- 100 653 947
- KR-B1- 101 316 046
- KR-U- 20110 006 163

## Description

### Technical Field

The present invention relates to a method for manufacturing seasoned laver, and more particularly, to a method for manufacturing seasoned laver, which can improve the quality of seasoned laver by using an oil spray device during processing.

### Background Art

Among seaweed side dishes, laver is a favorite of people, young and old, men and women. At home, seasoned laver prepared by applying sesame oil to laver, sprinkling a suitable amount of salt thereon and toasting the laver is usually taken.

Generally, processed laver products include dried laver and seasoned laver. As used herein, the term "seasoned laver" refers to one made by treating dried laver with oil and seasoning, table salt or the like. Toasting temperature, heat treatment conditions and time for manufacturing a seasoned laver product should be suitably controlled according to the product, and the product should have its own color and flavor and should be free from off-flavor and off-odor.

A conventional method for manufacturing seasoned laver comprises: toasting dried laver; applying a mixture of two or more oils (corn oil, sesame oil, perilla oil, grapeseed oil, olive oil, canola oil, etc.) to the toasted laver by passing the laver through rollers made of sponge; seasoning the surface of the oil-applied laver with salt; and further toasting the seasoned laver at a temperature between 200°C and 400°C. KR20040036475 describes a seasoned laver having improved taste, flavor and nutritional properties by adding chitosan, sesame, kelp, brown algae and pine needle powder and roasting within a short period of time.

### Disclosure of Invention

### Technical Problem

However, the conventional method for manufacturing seasoned laver as described above has a disadvantage in that sesame oil or perilla oil loses its natural flavor during the high-temperature toasting process after application thereof.

### Solution to Problem

Accordingly, the present inventors have conducted studies to minimize the loss of flavor, which is the disadvantage of the conventional method for manufacturing seasoned laver, and increase the preference of seasoned laver, and, as a result, have recognized that the loss of oil flavor is great after second-step toasting in the conventional method for manufacturing seasoned laver. Based on this recognition, the present inventors have found that, when a specific amount of oil such as sesame oil, perilla oil is additionally sprayed onto the surface of laver by an oil spray device after second-step toasting, seasoned laver having a rich flavor can be obtained, thereby completing the present invention.

Therefore, it is an object of the present invention to provide a method for manufacturing seasoned laver using an additional oil spray device.

A seasoned laver having an improved quality, is manufactured by the above method.

To achieve the above object the present invention provides a method for manufacturing seasoned laver, the method comprising the steps of:
1) toasting dried laver in a toasting tunnel at 50∼200°C for 2-3 seconds;
2) applying oil to the surface of the laver resulting from step 1) and seasoning the oil-applied laver with salt;
3) further toasting the seasoned laver of step 2) in a toasting tunnel at 200∼400°C for 5-7 seconds;
4) spraying and applying oil to the surface of the laver resulting from step 3); and
5) sorting the laver resulting from step 4), and cutting, arranging and packaging the screened laver.

### Brief Description of Drawings

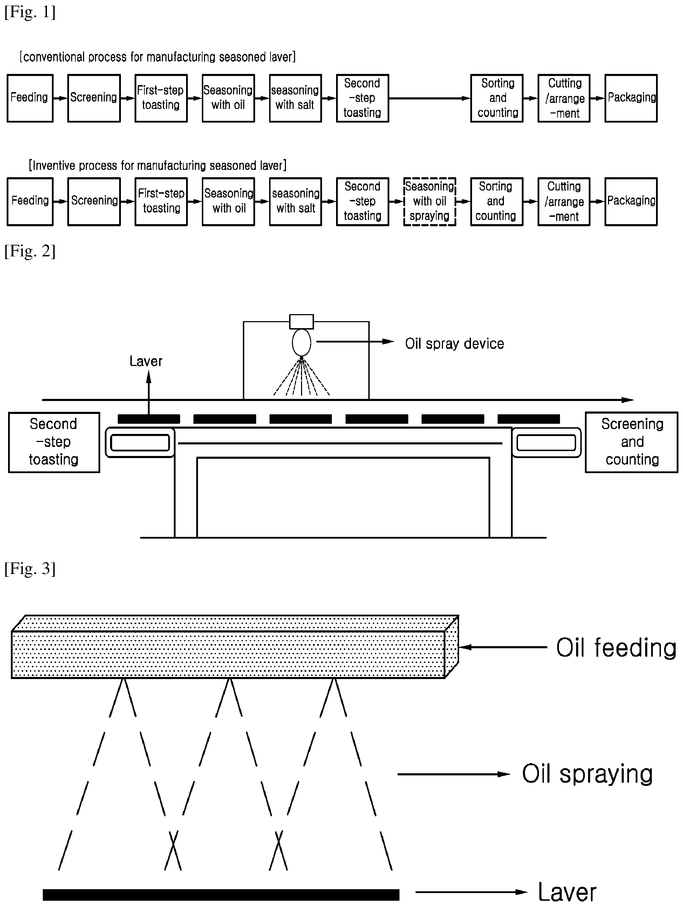

FIG. 1 shows a comparison between a conventional method for manufacturing seasoned laver and a method for manufacturing seasoned laver according to the present invention.
FIG. 2 shows a process in which an oil spray device according to the present invention is used.
FIG. 3 shows an oil spray device that is used in the present invention.
FIG. 4 shows the results of sensory evaluation for seasoned laver manufactured by a conventional method and seasoned laver manufactured by the method of the present invention.

### Mode for the Invention

Hereinafter, the present invention will be described in further detail.

The present invention provides a method for manufacturing seasoned laver, the method comprising the steps of:
1) toasting dried laver in a toasting tunnel at 50∼200°C for 2-3 seconds;
2) applying oil to the surface of the laver resulting from step 1) and seasoning the oil-applied laver with salt;
3) further toasting the seasoned laver of step 2) in a toasting tunnel at 200∼400°C for 5-7 seconds;
4) spraying and applying oil to the surface of the laver resulting from step 3); and
5) sorting the laver resulting from step 4), and cutting, arranging and packaging the sorted laver.

In the present invention, the dried laver is preferably fed sheet by sheet to a conveyor at a rate of, for example, 80-100 sheets per minutes, by an automatic feeder.

The dried laver fed to the conveyor is passed through a foreign matter detection unit to remove unsuitable dried laver having foreign matter or holes.

The oil that is used in step 2) may be one or a mixture of two or more selected from the group consisting of corn oil, sesame oil, perilla oil, grapeseed oil, olive oil and canola oil, but is not limited thereto. Generally, the oil is a mixture of about 90-99 wt% of corn oil or canola oil and about 1-10 wt% of one or more selected from among sesame oil, perilla oil, grapeseed oil and olive oil.

In step 2), preferably, 1-2.5 g of the oil is applied per sheet of the dried laver, and then 0.5-1 g of salt is applied to the surface of the laver having the oil applied thereto. Specifically, 100-250 g of the oil and 50-100 g of salt are applied per 100 sheets (about 260 g) of dried laver.

Step 2) is performed using sponge rollers. Specifically, while the toasted laver is passed through upper and lower sponge rollers wet with oil, the oil is applied to the laver by the pressure of the upper and lower sponges.

The laver having the oil applied thereto in step 2) makes it possible to achieve the savory flavor of the toasted oil and laver due to a synergistic effect between the laver and the oil during second-step toasting of step 3). In addition, the oil applied to the laver in step 2) has the effect of fixing salt to the laver surface, and thus the loss of the seasoned salt is reduced, thereby ensuring uniform taste quality.

In step 4), oil is sprayed onto the surface of the laver, toasted in step 3), using an oil spray device. Specifically, oil is finely sprayed onto the laver surface in an amount of 0.1-0.5 g per sheet of dried laver.

As described above, according to the present invention, the flavor of seasoned laver can be enhanced by supplementing the loss of oil after second-step toasting by the use of the oil spray device.

If oil is applied to laver after second-step toasting with conventional sponge rollers in place of the spray device, the seasoned salt will be lost because the salt adheres to the sponge rollers, and thus a designed salinity cannot be achieved. Also, in this case, the crispy laver after second-step toasting will be broken by the pressure of the upper and lower sponge rollers, or will become damp due to the excessive penetration of the oil into the laver.

However, when the oil spray device as disclosed in the present invention is used, there is an advantage in that, because oil in the storage tank of the spray device is selectively replaced, it is easy to selectively use desired oil, compared to the sponge roller method in which sponge should be squeezed to remove absorbed oil or sponge itself should be replaced. In addition, there is an advantage in that the amount of oil applied can be controlled by adjusting the shape of a spray nozzle, the exposure time, etc. Also, the flavor of oil, which was lost by heat during second-step toasting, can be supplemented by applying oil to the laver surface after second-step toasting using the oil spray device.

Herein, the amount of oil applied in step 4) is preferably 0.1- 0.5 g per sheet of dried laver. If 0.1 g or less of oil is sprayed onto the laver surface after second-step toasting, rich seasoned flavor, which is the purpose of the present invention, cannot be obtained, and if 0.5 g or more of oil is sprayed, an excessive amount of the oil will be applied to the seasoned laver, and thus the laver will become too damp before packaging.

The present invention also provides seasoned laver manufactured by the above-described method.

Seasoned laver manufactured by the above-described method is counted according to the intended use, weighed, cut, and then packaged.

Seasoned laver is preferably packaged within 1 minute after the oil spraying step so that the crispness of the laver will not be reduced.

Hereinafter, the present invention will be described in further detail with reference to examples.

### Examples

### Example 1: Manufacture of seasoned layer

Dried laver, raw material, stored in a low-temperature storehouse at -5°C was automatically fed sheet by sheet to a conveyor, and then screened through a foreign matter detection unit. The screened laver was toasted in a toasting tunnel at 50∼200°C for 3 seconds (first-step toasting), and then passed through sponge rollers to apply 2.1 g of a 9:1 mixture of corn oil and sesame oil to the laver sheet (260 x 190 cm; about 2.6 g). Then, the laver having the oil applied thereto was seasoned with 0.5 g of salt, after which it was further toasted in a toasting tunnel at 350°C for 6 seconds (second-step toasting).

After second-step toasting, 0.3 g of sesame oil was finely sprayed and applied to the laver surface using an oil spray device, thereby manufacturing seasoned laver.

The manufactured seasoned laver sheets were divided into groups, each consisting of 10 sheets according to the intended use, and weighed, cut, and then packaged.

### Experimental Example 1: Sensory evaluation of seasoned layer

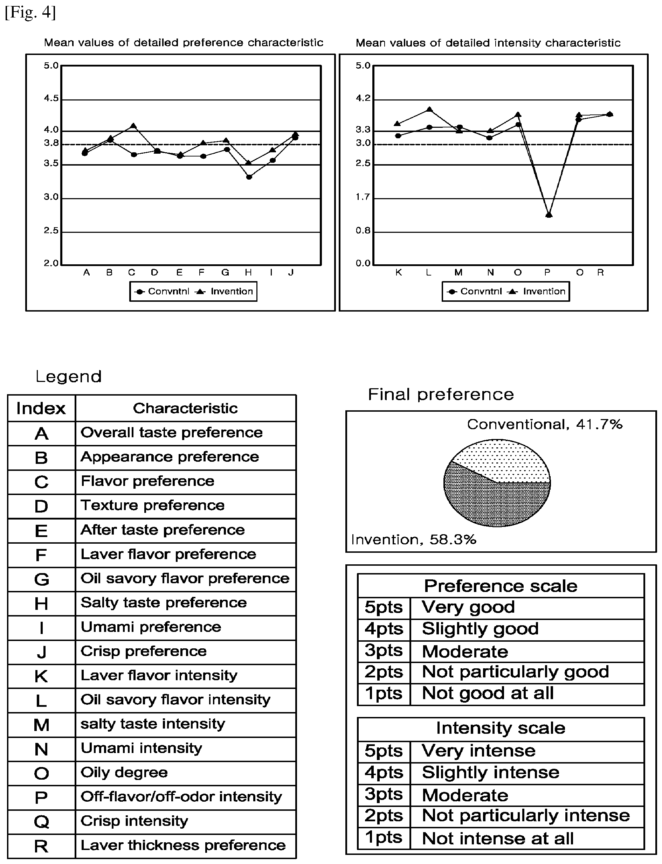

Sensory evaluation for a conventional laver product (trade name: Hat-ba-sac-jae-rae-kim (for lunch box use) manufactured by CJ CheilJedang) and the seasoned laver product manufactured by the process of Example 1 was performed by 60 panelists (25-34-year-old women). The results of the evaluation were rated on a five-point scale in terms of preference characteristics and intensity characteristics. As detailed items, whether the flavor and savory taste of the laver products are perceived and the overall preference were evaluated. The results are shown in Table 1 below and FIG. 4.

The results of quality evaluation by the panelists indicated that the value of the overall taste preference of the conventional seasoned laver was an average of 3.67 points and the value of the overall taste preference of the seasoned laver of the present invention was an average of 3.72 points, which was higher than that of the conventional seasoned laver.

In the results of the final preference, the preference of the conventional seasoned laver was 41.7%, and the preference of the seasoned laver of the present invention was 58.3%, which was higher than that of the conventional seasoned laver.

In the detailed characteristics, the savory flavor intensity of oil, the flavor intensity of laver and the flavor preference were stronger in the seasoned flavor product of the present invention, and the overall flavor of the seasoned laver product of the present invention was enhanced.

**Table 1: Mean values of detailed characteristics and analysis of significant difference**

| Characteristics | Conventional | | Invention | | Significant difference |
|---|---|---|---|---|---|
| | Mean | TOP 2% | Mean | TOP 2% | |
| Overall taste preference | 3.67 | 63.3 | 3.72 | 65.0 | 0.659 |
| Appearance preference | 3.87 | 73.3 | 3.87 | 70.0 | 1.000 |
| **Flavor preference** | **3.67** | **56.7** | **4.07** | **78.3** | **0.003** |
| Texture preference | 3.72 | 66.7 | 3.70 | 60.0 | 0.892 |
| Aftertaste preference | 3.62 | 56.7 | 3.65 | 63.3 | 0.771 |
| Laver flavor preference | 3.63 | 63.3 | 3.82 | 65.0 | 0.101 |
| Oil savory flavor preference | 3.72 | 63.3 | 3.87 | 71.7 | 0.315 |
| Salty taste preference | 3.32 | 48.3 | 3.52 | 53.3 | 0.224 |
| Umami preference | 3.55 | 50.0 | 3.70 | 61.7 | 0.192 |
| Crispness preference | 3.90 | 70.0 | 3.95 | 80.0 | 0.689 |
| **Laver flavor intensity** | **3.25** | **38.3** | **3.53** | **51.7** | **0.016** |
| **Oil savory flavor intensity** | **3.43** | **48.3** | **3.90** | **71.7** | **0.001** |
| Salty taste intensity | 3.45 | 51.7 | 3.35 | 41.7 | 0.527 |

As described above, according to the method for manufacturing seasoned laver according to the present invention, the loss of flavor, which is the disadvantage of the conventional method for manufacturing seasoned laver, can be minimized, and thus seasoned laver having a good flavor can be provided.

## Claims

1. A method for manufacturing seasoned laver, the method comprising the steps of:
1) toasting dried laver in a toasting tunnel at 50∼200 °C for 2-3 seconds;
2) applying oil to a surface of the laver resulting from step 1), and seasoning the oil-applied laver with salt;
3) further toasting the seasoned laver of step 2) in a toasting tunnel at 200∼400 °C for 5-7 seconds;
4) spraying and applying oil to the surface of the laver resulting from step 3) by using an oil spray device; and
5) sorting the laver resulting from step 4), and cutting, arranging and packaging the sorted laver.

2. The method of claim 1, wherein the oil in steps 2) and 4) is one or a mixture of two or more selected from the group consisting of corn oil, sesame oil, perilla oil, grapeseed oil, olive oil and canola oil.

3. The method of claim 1, wherein the oil in steps 2) and 4) is sesame oil or perilla oil.

4. The method of claim 1, wherein an amount of the oil that is applied to the laver surface in steps 2) is 1-2.5 g per sheet of the laver.

5. The method of claim 1, wherein an amount of the salt that is applied to the laver surface in steps 2) is 0.5-1 g per sheet of the laver.

6. The method of claim 1, wherein the oil is spray and applied to the laver surface in an amount of 0.1-0.5 g per sheet of the laver.

## Patentansprüche

1. Verfahren zur Herstellung von gewürztem Tang, wobei das Verfahren die folgenden Schritte umfasst:
1) Toasten von getrocknetem Tang in einem Toasttunnel bei 50∼200 °C für 2-3 Sekunden;
2) Auftragen von Öl auf eine Oberfläche des aus Schritt 1) resultierenden Tangs und Würzen des Tangs, auf dem Öl aufgetragenen wurde, mit Salz;
3) Weiteres Toasten des gewürzten Tangs aus Schritt 2) in einem Toasttunnel bei 200∼400 °C für 5-7 Sekunden;
4) Sprühen und Auftragen von Öl auf die Oberfläche des Tangs aus Schritt 3) unter Verwendung einer Ölsprühvorrichtung; und
5) Sortieren des aus Schritt 4) resultierenden Tangs und Schneiden, Anordnen und Verpacken des sortierten Tangs.

2. Verfahren nach Anspruch 1, wobei das Öl in den Schritten 2) und 4) eines oder eine Mischung von zwei oder mehr ist, ausgewählt aus der Gruppe bestehend aus MaisÖl, Sesamöl, Perillaöl, Traubenkernöl, Olivenöl und Rapsöl.

3. Verfahren nach Anspruch 1, wobei das Öl in den Schritten 2) und 4) Sesamöl oder Perillaöl ist.

4. Verfahren nach Anspruch 1, wobei eine Menge des Öls, die in den Schritten 2) auf die Tangoberfläche aufgebracht wird, 1-2,5 g pro Blatt des Tangs beträgt.

5. Verfahren nach Anspruch 1, wobei eine Menge des Salzes, die in den Schritten 2) auf die Tangoberfläche aufgebracht wird, 0,5-1 g pro Blatt des Tangs beträgt.

6. Verfahren nach Anspruch 1, wobei das Öl Spray ist und in einer Menge von 0,1-0,5 g pro Blatt des Tangs auf die Tangoberfläche aufgetragen wird.

## Revendications

1. Procédé de fabrication d'une porphyre assaisonnée, le procédé comprenant les étapes consistant à :
1) griller de la porphyre séchée dans un tunnel de grillage à 50 ^{∼} 200 °C pendant 2 à 3 secondes ;
2) appliquer de l'huile sur une surface de la porphyre obtenue à l'étape 1), et assaisonner la porphyre recouverte d'huile avec du sel ;
3) griller davantage la porphyre assaisonnée de l'étape 2) dans un tunnel de grillage à 200 ^{∼} 400 °C pendant 5 à 7 secondes ;
4) pulvériser et appliquer de l'huile sur la surface de la porphyre obtenue à l'étape 3) en utilisant un dispositif de pulvérisation d'huile ; et
5) trier la porphyre obtenue à l'étape 4), et couper, agencer et conditionner la porphyre triée.

2. Procédé selon la revendication 1, dans lequel l'huile des étapes 2) et 4) est l'une de ou un mélange de deux huiles ou plus sélectionnée(s) dans le groupe constitué par l'huile de maïs, l'huile de sésame, l'huile de périlla, l'huile de pépins de raisin, l'huile d'olive et l'huile de colza.

3. Procédé selon la revendication 1, dans lequel l'huile des étapes 2) et 4) est de l'huile de sésame ou de l'huile de périlla.

4. Procédé selon la revendication 1, dans lequel une quantité de l'huile qui est appliquée sur la surface de la porphyre à l'étape 2) est de 1 à 2,5 g par feuille de porphyre.

5. Procédé selon la revendication 1, dans lequel une quantité de sel qui est appliquée sur la surface de la porphyre à l'étape 2) est de 0,5 à 1g par feuille de porphyre.

6. Procédé selon la revendication 1, dans lequel l'huile est pulvérisée et appliquée sur la surface de la porphyre dans une quantité de 0,1 à 0,5 g par feuille de porphyre.
